Europäisches Patentamt

European Patent Office

Office européen des brevets

(19)

(11) **EP 0 659 838 B1**

## (12) EUROPÄISCHE PATENTSCHRIFT

(45) Veröffentlichungstag und Bekanntmachung des Hinweises auf die Patenterteilung:
**03.04.1996 Patentblatt 1996/14**

(51) Int Cl.[6]: **C08L 83/14**, C08G 77/48, C08F 283/12

(21) Anmeldenummer: **94117748.7**

(22) Anmeldetag: **10.11.1994**

(54) **Pfropfcopolymerisate aus Organopolysiloxanen als Radikalmakroinitiatoren**

Organopolysiloxane copolymers as radical macro-initiators

Copolymeres d'organopolysiloxane comme macro-initiateur radicalaire

(84) Benannte Vertragsstaaten:
**AT BE CH DE ES FR GB IT LI NL**

(30) Priorität: **10.11.1993 DE 4338421**

(43) Veröffentlichungstag der Anmeldung:
**28.06.1995 Patentblatt 1995/26**

(73) Patentinhaber: **Wacker-Chemie GmbH**
**D-81737 München (DE)**

(72) Erfinder:
- **Geck, Michael, Dr.**
  **D-84489 Burghausen (DE)**
- **Dauth, Jochen, Dr.**
  **D-84489 Burghausen (DE)**
- **Deubzer, Bernward, Dr.**
  **D-84489 Burghausen (DE)**
- **Oswaldbauer, Helmut**
  **D-94166 Stubenberg/Fürstberg (DE)**
- **Schmidt, Manfred, Prof.Dr.**
  **D-95488 Eckersdorf (DE)**
- **Baumann, Frank**
  **D-92676 Eschenbach/Oberpfalz (DE)**

(56) Entgegenhaltungen:
EP-A- 0 098 947          EP-A- 0 326 728
EP-A- 0 413 550          EP-A- 0 421 894
EP-A- 0 582 879

- European Polymer Journal,26(1990)no 5, pp 565- 569, "synthesis of silicone-vinyl block copoly- mers", Simionescu et al. *article *
- European Polymer Journal,26(1990)no 5, pp 565- 569, Simonescu et al. :"Synthesis of silicone-vinyl block copolymers"

**Beschreibung**

Die Erfindung betrifft vernetzte, radikalbildende Gruppen aufweisende Organopolysiloxane, deren Herstellung, Pfropfcopolymerisate aus den erfindungsgemäßen Organopolysiloxanen als Radikalmakroinitiatoren und radikalisch Polymerisierbaren organischen Monomeren und ein Verfahren zur Herstellung der Pfropfcopolymerisate.

In Journal of Polymer Science, Vol 26, 1077-92 (1988) ist ein Verfahren zur Herstellung von Silicon-Vinyl-Blockcopolymeren, ausgehend von linearen Polysiloxan(azobiscyanopentanamid)-Makroinitiatoren, die durch Umsetzung von $\alpha,\omega$-Aminopropylpolydimethylsiloxanen mit 4,4'-Azobis(4-cyanopentansäurechlorid) erhalten werden, und anschließende Blockpolymerisation mit Vinylmonomeren, beschrieben.

Eine Möglichkeit der Herstellung von Pfropfcopolymeren besteht darin, ein Polymer, welches eine zur Reaktion befähigte funktionelle Endgruppe trägt, auf ein anderes Polymer aufzupropfen. Dieses als "grafting onto"-Verfahren bezeichnete Verfahren ist Stand der Technik bei der Herstellung von Pfropfcopolymeren aus einem siliciumorganischen Polymer(kern)anteil und einem organischen Polymer(hüllen)anteil, wie beschrieben z.B. in US-A-5,223,586. Hierbei werden (mono)olefinisch ungesättigte, radikalisch polymerisierbare Monomere, wie Vinylmonomere, in Gegenwart von externen Radikalinitiatoren nach dem Emulsionspolymerisationsverfahren auf ein emulgiertes Organopolysiloxan aufgepfropft.

Durch dieses "grafting onto"-Verfahren wird mittels eines externen Redox-Initiatorsystems eine Homopolymerisation der Organomonomeren gestartet, die wachsenden Organopolymerketten binden hierbei an die (Silicon-) Pfropfgrundlage an. Ein offensichtlicher Nachteil dieses Verfahrens ist, daß die Anbindung des Organopolymers an das Polysiloxan nicht zwingend gegeben ist, und somit ein beträchtlicher Teil des Organopolymers nicht auf das Polysiloxan aufgepropft wird, sondern als nicht angebundenes Homopolymerisat vorliegt; dies läßt sich z. B. durch Extraktionen an unlöslichen Pfropfcopolymeren aus siliciumorganischem und organischem Polymeranteil, die nach dem "grafting onto"-Verfahren hergestellt wurden, nachweisen. Weiterhin nachteilig am Verfahren des "grafting onto" ist, daß in Folge intramolekularer Verknüpfungen, insbesondere Verschlaufungen durch Mehrfachanbindung der Organopolymerkette am siliciumorganischen Polymerkern, unkontrolliert aufgebaute Pfropfcopolymere entstehen, was sich durch strukturelle Charakterisierung solcher Pfropfcopolymerer, z. B. mittels statischer und dynamischer Lichtstreuung, belegen läßt.

Es bestand die Aufgabe, Organopolysiloxane als Radikalmakroinitiatoren bereitzustellen, mit denen Pfropfcopolymerisate aus vernetzten Organopolysiloxanen und Organopolymeren herstellbar sind, welche die obengenannten Nachteile der bekannten Pfropfcopolymerisate, nämlich hoher Anteil an Organopolymer-Homopolymerisat und unkontrollierter Aufbau, nicht aufweisen.

Die Erfindung betrifft vernetzte, radikalbildende Gruppen aufweisende Organopolysiloxane, aufgebaut aus

0,2 bis 50,0 Gew.-% Einheiten der allgemeinen Formel

$$[R_aSi(O_{(3-a)/2})\text{-}R^1\text{-}X\text{-}(R^1\text{-}Si(O_{(3-a)/2}))_bR_a] \tag{1},$$

0 bis 80,0 Gew.-% Einheiten der allgemeinen Formel

$$[R_3SiO_{1/2}] \tag{2},$$

0 bis 99,5 Gew.-% Einheiten der allgemeinen Formel

$$[R_2SiO_{2/2}] \tag{3},$$

0 bis 99,8 Gew.-% Einheiten der allgemeinen Formel

$$[RSiO_{3/2}] \tag{4}$$

und

0 bis 80,0 Gew.-% Einheiten der allgemeinen Formel

$$[SiO_{4/2}] \tag{5},$$

wobei

**R**   gleiche oder verschiedene einwertige SiC-gebundene, gegebenenfalls substituierte $C_1$- bis $C_{18}$-Kohlenwasserstoffreste,

**R¹**   gleiche oder verschiedene zweiwertige SiC-gebundene, gegebenenfalls substituierte $C_1$- bis $C_{18}$-Kohlenwasserstoffreste, welche durch

zweibindige, beidseitig an Kohlenstoffatome gebundene Reste aus der Gruppe -O-, -COO-, -OOC-, -CONR²-, -NR²CO- und -CO- unterbrochen sein können,

**R²**   ein Wasserstoffatom oder einen Rest **R**,

**X**   einen Rest aus der Gruppe -N=N-, -O-O-, -S-S- und $-C(C_6H_5)_2\text{-}C(C_6H_5)_2\text{-}$,

**a** die Werte 0, 1 oder 2 und,

**b** die Werte 0 oder 1 bedeuten

mit der Maßgabe, daß die Summe der Einheiten der allgemeinen Formeln (4) und (5) mindestens 0,5 Gew.-% beträgt und daß höchstens 5 Gew.-% der Organopolysiloxane mit Toluol extrahierbar sind.

Die erfindungsgemäßen Organopolysiloxane sind aufgrund ihrer vernetzten Struktur in allen Lösungsmitteln bis auf geringe Anteile unlöslich. Vorzugsweise sind höchstens 2 Gew.-% der Organopolysiloxane mit Toluol extrahierbar.

Beispiele für unsubstituierte Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl-und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest **R** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino-(2-methyl)propylrest; Aminoarylreste, wie der Aminophenyl-rest; Acyloxyalkylreste, wie der 3-Acryloxypropyl- und 3-Methacryloxypropylrest; und Hydroxyalkylreste, wie der Hydroxypropylrest.

Bei dem Rest **R** handelt es sich bevorzugt um unsubstituierte und substituierte $C_1$- bis $C_6$-Alkylreste und den Phenylrest, insbesondere um den Methyl-, Ethyl-, Propyl- und Phenylrest, in der allgemeinen Formel (1) um den Methyl-, Ethyl-, Propyl- und Phenylrest.

Beispiele für zweiwertige Kohlenwasserstoffreste $R^1$ sind gesättigte Alkylenreste wie der Methylen- und Ethylenrest, sowie Propylen-, Butylen-, Pentylen-, Hexylen-, Cyclohexylen- und Octadecylenreste oder ungesättigte Alkylen- oder Arylenreste, wie der Hexenylenrest und Phenylenreste und insbesondere Reste der Formeln (6)

$$-(CH_2)_3N(R^3)-C(O)-(CH_2)_2-C(CN)(CH_3)- \hspace{3cm} (6),$$

in der

$R^3$ ein Wasserstoffatom, einen Methyl- oder Cyclohexylrest bedeutet und (7)

$$-(CH_2)_3-O-C(O)-(CH_2)_2-C(O)- \hspace{2cm} (7),$$

Bevorzugte Reste X sind -N=N- und -O-O-.

Besonders bevorzugte Einheiten der allgemeinen Formel (1) fallen unter die allgemeine Formel (8)

$$[(CH_3)_aSi(O_{(3-a)/2})-(CH_2)_3-N(R^3)-C(O)-(CH_2)_2-C(CN)(CH_3)-N=]_2$$

in der

**a** und $R^3$ die vorstehenden Bedeutungen aufweisen.

Vorzugsweise enthalten die erfindungsgemäßen Organopolysiloxane

0,5 bis 20,0 Gew.-% Einheiten der allgemeinen Formel (1),
0 bis 50,0 Gew.-% Einheiten der allgemeinen Formel (2),
0 bis 99,0 Gew.-% Einheiten der allgemeinen Formel (3),
0 bis 99,5 Gew.-% Einheiten der allgemeinen Formel (4) und
0 bis 50,0 Gew.-% Einheiten der allgemeinen Formel (5)

mit der Maßgabe, daß die Summe der Einheiten der allgemeinen Formeln (4) und (5) mindestens 1 Gew.-% beträgt.

Insbesondere enthalten die erfindungsgemäßen Organopolysiloxane

0,5 bis 10,0 Gew.-% Einheiten der allgemeinen Formel (1),
0 Gew.-% Einheiten der allgemeinen Formel (2),
0 bis 98,5 Gew.-% Einheiten der allgemeinen Formel (3),
1 bis 99,5 Gew.-% Einheiten der allgemeinen Formel (4) und

0 bis 20,0 Gew.-% Einheiten der allgemeinen Formel (5).

Bei den erfindungsgemäßen Organopolysiloxanen handelt es sich vorzugsweise um sphärische Mikrogele mit Partikeldurchmessern von bevorzugt 5 bis 200 nm in wäßrigem Medium. Die Molmassen der erfindungsgemäßen Organopolysiloxan-Radikalmakroinitiatoren liegen bevorzugt bei $10^5$ bis $10^{10}$, insbesondere $5.10^5$ bis $10^9$ g/Mol.

Ein weiterer Gegenstand der Erfindung ist ein Verfahren zur Herstellung der erfindungsgemäßen vernetzten, radikalbildende Gruppen aufweisenden Organopolysiloxane durch Zudosieren von Silanen der allgemeinen Formel (9)

$$R_aSi((OR^4)_{3-a})\text{-}R^1\text{-}X\text{-}(R^1\text{-}Si(OR^4)_{3-a}))_bR_a \tag{9},$$

und siliciumorganischen Verbindungen der allgemeinen Formel (10)

$$R_cSi(OR^4)_{4-c} \tag{10},$$

und gegebenenfalls siliciumorganischen Verbindungen aus Einheiten der allgemeinen Formel (11)

$$R_d(R^4O)_eSiO_{4-d-e/2} \tag{11},$$

wobei

$R^4$    die Bedeutungen von $R$,
$c$    die Werte 0, 1, 2 oder 3,
$d$    und $e$ jeweils unabhängig voneinander die Werte 0, 1, 2, 3 oder 4 und

$R$, $R^4$, $X$, $a$ und $b$ die vorstehenden Bedeutungen aufweisen, zu einer bewegten Mischung aus Emulgator und Wasser.

Beim vorstehenden Verfahren handelt es sich um ein Emulsionspolymerisations-/polykondensationsverfahren.

Vorzugsweise werden als siliciumorganische Verbindungen aus Einheiten der allgemeinen Formel (11) die Organosiloxane aus Einheiten der allgemeinen Formel (12)

$$R_2SiO_{2/2} \tag{12},$$

oder Organosiloxane der allgemeinen Formel (13)

$$R_3SiOSiR_3 \tag{13},$$

eingesetzt.

Die eingesetzten Mengen an Verbindungen der allgemeinen Formeln (9), (10) und (11) werden so gewählt, daß die erfin-dungsgemäßen Organopolysiloxane erhalten werden.

Vorzugsweise betragen die eingesetzten Mengen an Verbindungen

der allgemeinen Formel (9) 0,2 bis 50 Gew.-%,
der allgemeinen Formel (10) 0,0 bis 99,8 Gew.-%,
der allgemeinen Formel (12) 0,0 bis 99,0 Gew.-% und
der allgemeinen Formel (13) 0,0 bis 70,0 Gew.-%,

jeweils unabhängig voneinander und bezogen auf die Gesamtmenge an siliciumorganischen Ausgangsverbindungen. Bei dem Rest $R^4$ handelt es sich bevorzugt um unsubstituierte $C_1$- bis $C_6$-Alkylreste und den Phenylrest, wobei Methyl-, Ethyl- und Propylreste besonders bevorzugt sind.

Bevorzugte Beispiele für die siliciumorganischen Verbindungen der allgemeinen Formel (10) sind Tetraethoxysilan, Methyltrimethoxysilan, Phenyltriethoxysilan, Dimethyldiethoxysilan, Dimethyldimethoxysilan und Trimethylethoxysilan.

Vorzugsweise weisen die siliciumorganischen Verbindungen aus Einheiten der allgemeinen Formel (12) 3 bis 8, insbesondere 4 oder 5 Einheiten auf. Ein bevorzugtes Beispiel ist Octamethylcyclotetrasiloxan.

Ein bevorzugtes Beispiel für die siliciumorganischen Verbindungen der allgemeinen Formel (13) ist Hexamethyldisiloxan.

Besonders geeignete Emulgatoren sind Alkylsulfate, z.B. mit einer Kettenlänge von 8-18 C-Atomen, Aryl- und Alkylethersulfate mit 8-18 C-Atomen im hydrophoben Rest und 1-40 Ethy-Ethylenoxid(EO)- bzw. Propylenoxid(PO)-Einheiten;

Sulfonate, z.B. Alkylsulfonate mit 8-18 C-Atomen, Alkylarylsulfonate mit 8-18 C-Atomen, Ester und Halbester der Sulfobernsteinsäure mit einwertigen Alkoholen oder Alkylphenolen mit 4-15 C-Atomen; ggf. können diese Alkohole oder Alkylphenole auch mit 1-40 EO-Einheiten ethoxyliert sein;

Alkali- und Ammoniumsalze von Carbonsäuren mit 8-20 C-Atomen im Alkyl-, Aryl-, Alkaryl- oder Aralkylrest;
Phosphorsäureteilester und deren Alkali- und Ammoniumsalze, z. B. Alkyl- und Alkarylphosphate mit 8-20 C-Atomen im organischen Rest, Alkylether- bzw. Alkaryletherphosphate mit 8-20 C-Atomen im Alkyl- bzw. Alkarylrest und 1-40 EO-Einheiten;
Alkylpolyglykolether mit 2-40 EO-Einheiten und Alkylresten von 4-20 C-Atomen;
Alkylarylpolyglykolether mit 2-40 EO-Einheiten und 8-20 C-Atomen in den Alkyl- und Arylresten;
Ethylenoxid/Propylenoxid(EO/PO)-Blockcopolymere mit 8-40 EO- bzw. PO-Einheiten;
Fettsäurepolyglykolester mit 6-24 C-Atomen und 2-40 EO-Einheiten;
Alkylpolyglykoside, Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen;
polare Gruppen enthaltende lineare Organo(poly)siloxane mit Alkoxygruppen mit bis zu 24 C-Atomen und/oder bis zu 40 EO- und/oder PO-Gruppen;
Salze von primären, sekundären und tertiären Fettaminen mit 8-24 C-Atomen mit Essigsäure, Schwefelsäure, Salzsäure und Phosphorsäuren;
Quarternäre Ammoniumsalze wie Halogenide, Sulfate, Phosphate, Acetate oder Hydroxide;
Alkylpyridinium-, Alkylimidazolinium- und Alkyloxazoliniumsalze, deren Alkylkette bis zu 18 C-Atome besitzt, in Form ihrer Halogenide, Sulfate, Phosphate oder Acetate.

Bevorzugt sind aliphatisch substituierte Benzolsulfonsäuren und deren Salze sowie quarternäre Ammoniumhalogenide und -hydroxide.

Die einzusetzende Menge an Emulgator beträgt von 0,5 - 20 Gew.-%, vorzugsweise 1,0 - 10 Gew.-%, jeweils bezogen auf die insgesamt eingesetzte Menge an siliciumorganischen Ausgangsverbindungen. Die siliciumorganischen Ausgangsverbindungen der allgemeinen Formeln (9) bis (13) werden dosiert zugegeben. Vorzugsweise werden alle Ausgangskomponenten im gewünschten Verhältnis gemischt; um eine homogene Mischung zu erhalten, werden gegebenenfalls zusätzlich 0,1 - 30 Gew.-%, bezogen auf die Ausgangskomponenten, Alkanol der Formel $R^4OH$ als Löslichkeitsvermittler zugesetzt, wobei die Alkanole Methanol, Ethanol und Propanol besonders bevorzugt sind. Die Ausgangsverbindungen, insbesondere die Silane der allgemeinen Formel (10), können auch nicht im Gemisch, sondern sukzessive dosiert zugegeben werden, was aber nicht bevorzugt ist.

Herstellungsbedingt können die erfindungsgemäßen Organopolysiloxane noch geringe Mengen an Kohlenwasserstoffoxyresten $OR^4$ und/oder Hydroxylgruppen enthalten, dies ist aber nicht bevorzugt.

Die Emulsionspolymerisation/polykondensation wird bei 5 - 95°C, vorzugsweise bei 10 - 85°C und besonders bevorzugt bei 10 - 40°C durchgeführt. Der pH-Wert der Polymerisations/polykondensationsmischung beträgt von 1 - 12, vorzugsweise von 7 - 11. Bei der Herstellung der Organopolysiloxane ist es für die Stabilität der Emulsion vorteilhaft, nach Ende der Dosierung noch 0,5 bis 15 Stunden nachzurühren. Das bei der Hydrolyse freigesetzte Alkanol kann durch Destillation, gegebenenfalls unter reduziertem Druck, entfernt werden. Der Festgehalt der so hergestellten Organopolysiloxan-Dispersion sollte vorzugsweise maximal 25 Gew.-% betragen, da sonst ein hoher Anstieg der Viskosität die Weiterverarbeitung der Dispersion als Pfropfgrundlage erschwert.

In einer besonders bevorzugten Ausführungsform werden 90 bis 99,5 Gew.-% Silan oder Gemisch von Silanen der allgemeinen Formel (10), in der **c** die Werte 0, 1, oder 2, **R** einen Methyl-, Ethyl-, Propyl- oder Phenyl- und $R^4$ einen Methyl- oder Ethylrest bedeuten, sowie 0,5 bis 10 Gew.-%, jeweils bezogen auf die Gesamtmenge an siliciumorganischen Ausgangsverbindungen, Silan der allgemeinen Formel (14)

$$[(CH_3)_aSi((OR^4)_{3-a})\text{-}(CH_2)_3\text{-}N(R^3)\text{-}C(O)\text{-}(CH_2)_2\text{-}C(CN)(CH_3)\text{-}N=]_2$$

in der

$R^4$    einen Methyl- oder Ethylrest bedeutet und

**a** und $R^3$ die vorstehenden Bedeutungen aufweisen, gegebenenfalls mit 0,1 bis 30 Gew.-%, bezogen auf die Gesamtmenge an siliciumorganischen Ausgangsverbindungen, an Methanol, Ethanol und/oder Propanol versetzt, und das Gemisch vorzugsweise bei Raumtemperatur vorzugsweise im Verlauf von 1 - 8 Stunden zu einer bewegten Mischung von 1 -10 Gew.-%, bezogen auf die eingesetzte Menge an Organosiliciumverbindungen, Methylalkylbenzylammoniumsalz in Wasser dosiert und vorzugsweise weitere 1 - 15 Stunden bei Raumtemperatur gerührt. Der pH-Wert der Wasser-Emulgator-Mischung beträgt von 7 -11 und wird deshalb vorzugsweise zuvor mit Base, insbesondere Alkalihydroxid, eingestellt.

Die Radikalinitiator-enthaltenden Silane werden nach diesem Verfahren nahezu quantitativ in die erfindungsgemäßen Organopolysiloxan-Radikalmakroinitiatoren eingebaut. Dies läßt sich zeigen, indem man die wäßrigen Dispersionen durch Salzzusatz bricht, die Radikalmakroinitiatoren in Substanz isoliert, wäscht, bei Raumtemperatur im Vakuum trocknet und mittels Differentialkalorimetrie (DSC) untersucht. Wie dem Fachmann bekannt ist, erlaubt die DSC die Messung von Wärmemengen, die von einer Probe bei isothermer Arbeitsweise aus der Umgebung aufgenommen oder an sie abgegeben werden. Bei der Thermolyse z. B. azogruppenhaltiger Verbindungen ergibt die Gesamtfläche unter dem exothermen Zersetzungspeak, normiert auf die Masse der vermessenen Probe, die Zersetzungsenthalpie in J/g und ist damit dem Azogruppengehalt der Verbindung direkt proportional. Bezieht man die Zersetzungsenthalpie eines azogruppenhaltigen Siliconnetzwerkes auf die Zersetzungsenthalpie des azogruppenhaltigen Ausgangssilans, läßt sich der tatsächliche Azogruppengehalt im Siliconnetzwerk ermitteln.

Die erfindungsgemäßen Organopolysiloxane werden vorzugsweise als Radikalmakroinitiatoren für die Pfropfpolymerisation von ethylenisch ungesättigten organischen Monomeren eingesetzt.

Ein weiterer Gegenstand der Erfindung ist ein Verfahren zur Herstellung von Pfropfcopolymerisaten, bei dem

95 bis 5 Gew.-% an erfindungsgemäßen Organopolysiloxanen mit
5 bis 95 Gew.-% an ethylenisch ungesättigte Monomeren

in wässriger Dispersion umgesetzt werden.

Bei dem erfindungsgemäßen Verfahren trägt das zu pfropfende Polymer eine reaktive Gruppierung, die mit dem zur Pfropfung zugesetzten Monomer reagiert. Dieses Verfahren wird als "grafting from"-Verfahren bezeichnet. Bei einem Start der Polymerisation wachsen die Pfropfäste direkt auf die Pfropfgrundlage auf, so daß sich gezielt und kontrollierbar Pfropfcopolymere mit definierter Struktur aufbauen lassen. Durch den kovalenten Einbau von Initiatoren in das zu pfropfende Polymer, welche zu Radikalen zerfallen und dann Pfropfpolymerisationen einleiten können, ist eine Homopolymerisation des Pfropfmonomeren nur in sehr geringem Umfang und nur durch Übertragungsreaktionen möglich.

Vorzugsweise wird eine vorstehend beschriebene Dispersion der erfindungsgemäßen Organopolysiloxane als Radikalmakroinitiatoren vorgelegt. Die Dispersion wird, sofern nicht bereits bei ihrer Herstellung geschehen, gegebenenfalls von bei der Hydrolyse der Ausgangssilane gebildetem Alkohol durch Destillation bei vorzugsweise 20 - 40°C und reduziertem Druck befreit und gegebenenfalls mit Wasser verdünnt. Gegebenenfalls wird die Dispersion mit weiteren 1 - 15 Gew.-%, bezogen auf die Menge des enthaltenen Radikalmakroinitiators, Emulgator versetzt, was bevorzugt ist. Vorzugsweise wird der gleiche Emulgator eingesetzt, der auch zur Herstellung der Radikalmakroinitiator-Dispersion verwendet wurde. Die Dispersion wird vorzugsweise 10 bis 90 Minuten mit Stickstoff gesättigt, der pH-Wert der Dispersion sollte vorzugsweise 7 - 9 betragen.

Anschließend werden ethylenisch ungesättigte organische Monomere in einer Menge zudosiert, die 5 - 95 Gew.-%, vorzugsweise 20 - 80 Gew.-%, jeweils bezogen auf das Gesamtgewicht des Pfropfcopolymerisats, beträgt. Als Monomere für den organischen Polymeranteil werden vorzugsweise Acrylsäureester oder Methacrylsäureester von aliphatischen Alkoholen und Diolen mit 1 - 10 C-Atomen, Acrylnitril, Styrol, p-Methylstyrol, $\alpha$-Methylstyrol, Vinylacetat, Vinylpropionat, Maleinimid, Vinylchlorid, Ethylen, Butadien, Isopren und Chloropren eingesetzt. Besonders bevorzugt sind Styrol sowie Acrylsäureester und Methacrylsäureester von aliphatischen Alkoholen mit 1 - 4 C-Atomen, beispielsweise Methyl(meth)acrylat, Ethyl(meth)acrylat oder Butyl(meth)acrylat. Als organischer Polymeranteil sind sowohl Homopolymerisate als auch Mischpolymerisate der genannten Monomere geeignet.

Die Pfropfung ausgehend von den Organopolysiloxan-Radikalmakroinitiatoren wird vorzugsweise durch Temperaturerhöhung auf 30 - 90°C, bevorzugt 60 - 85°C, gestartet. Zur vollständigen Polymerisation wird die Starttemperatur für 30 Minuten bis 8 Stunden, bevorzugt 1 - 2 Stunden, beibehalten. Restmengen an nichtumgesetztem Organomonomer können anschließend durch Destillation entfernt werden, was bevorzugt ist. Die Isolierung der erfindungsgemäßen Pfropfcopolymerisate aus der Dispersion kann nach bekannten Verfahren erfolgen, beispielsweise durch Koagulation der Latices mittels Salzzugabe oder Zugabe von polaren Lösungsmitteln oder Sprühtrocknung.

Ein weiterer Gegenstand der Erfindung sind die nach dem erfindungsgemäßen Verfahren erhältlichen Pfropfcopolymerisate.

Bei den erfindungsgemäßen Pfropfcopolymerisaten handelt es sich um sphärische Partikel mit Partikeldurchmessern von vorzugsweise 10 bis 250 nm im wäßrigen Medium. Die Molmassen der erfindungsgemäßen Pfropfcopolymerisate liegen bevorzugt bei $10^6$ bis $10^{10}$, insbesondere $5.10^5$ bis $10^9$ g/Mol.

Die nach dem erfindungsgemäßen Verfahren hergestellten Pfropfcopolymerisate weisen einen definierten Aufbau durch gezielte Anbindung der Organopolymerketten an die Siliconpfropfgrundlage und (Silicon-)Kern-(Organopolymer-)Schale-Struktur auf. In Abhängigkeit vom Gehalt an Einheiten der allgemeinen Formel (1) und damit von der Pfropfstellendichte auf dem Organopolysiloxan bilden sich stern- bis bürstenförmige Pfropfcopolymerstrukturen aus. Pfropfcopolymerisate, die einen weichen, wenig vernetzten Siliconelastomerkern besitzen und z.B. mit Methylmethacrylat oder Styrol gepfropft sind, sind Problemlos sprühtrockenbar und thermoplastisch verarbeitbar. Ferner zeigen die nach erfindungsgemäßem Verfahren hergestellten Pfropfcopolymerisate eine deutlich verbesserte Anbindung des Organopolymers an die Siliconpfropfgrundlage und damit einen erheblich niedrigeren Anteil an freiem Organopolymer-Homopolymerisat als entsprechende Pfropfcopolymerisate, die dem Stand der Technik gemäß nach der "grafting onto"-Methode hergestellt wurden; dies läßt sich durch Extraktionsversuche belegen.

Die erfindungsgemäßen Pfropfcopolymere eignen sich vor allem zur Anwendung als modifizierte Thermoplaste oder zur Verwendung als Additive zur Polymermodifizierung.

Zur strukturellen Charakterisierung der Pfropfcopolymeren und der Organopolysiloxan-Radikalmakroinitiatoren eignet sich besonders die statische und dynamische Lichtstreuung. Statische und dynamische Lichtstreuung sind dem Fachmann bekannte, etablierte Methoden in der makromolekularen Chemie und Kolloidchemie zur Charakterisierung disperser Partikel. In der statischen Lichtstreuung mittelt man die Streuintensität bei verschiedenen Winkeln über ein genügend langes Zeitintervall und erhält Aussagen über die statischen Eigenschaften der Makromoleküle, wie dem Gewichtsmittel der Molmasse $M_w$, dem z-Mittel des Quadrats des Trägheitsradius $<R_g^2>_z$, und dem zweiten Virialkoeffizienten $A_2$, der die intra- und intermolekularen thermodynamischen Wechselwirkungen der dispergierten Partikel mit dem Lösungsmittel beschreibt. Im Gegensatz zur statischen wird bei der dynamischen Lichtstreuung die Fluktuation der Streulichtintensität als Funktion der Zeit beobachtet. Dies führt zu Aussagen über das dynamische Verhalten der untersuchten Moleküle. Gemessen werden das z-Mittel des Diffusionskoeffizienten $D_z$ und damit über das Stokes-Einstein-Gesetz der hydrodynamische Radius $R_h$ und der Koeffizient $k_d$, der die Konzentrationsabhängigkeit des Diffusionskoeffizienten beschreibt. Aus der Winkelabhängigkeit des Streulichts kann man die Teilchenform ermitteln und gegebenenfalls vorhandene Strukturierungen in Lösung aufklären. Die simultane statische und dynamische Lichtstreumessung ermöglicht es, mit einem einzigen Experiment die oben genannten Aussagen über das untersuchte System zu treffen. Dies ist beispielsweise in S. Bantle, M. Schmidt u. W. Burchard, Macromolecules 15, 1604 (1982) beschrieben. Der Quotient aus Trägheits- und hydrodynamischem Radius, das sogenannte ρ-Verhältnis, liefert Aussagen über die Teilchenform, wie harte Kugel, Hohlkugel oder Sternpolymer. Durch spezielle Techniken, wie Index-matching kann der Brechungsindex z. B. eines Siliconkerns an den Brechungsindex des Dispergiermediums angeglichen werden und somit die Polymerschale z.B. eines Siliconkern-Organopolymerhülle-Pfropfcopolymeren alleine detektiert werden. Durch Überführen der Pfropfcopolymeren vom wäßrigen Medium in organisches Dispergiermittel lassen sich z. B. strukturelle Informationen, wie Teilchenform über diese Systeme in tensidfreier Form im nichtwäßrigen Dispergiermedium erhalten.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C

Die nachstehenden Akkürzungen wurden verwendet:
d. Th. = der Theorie

Beispiele

- Lichtstreuung:

Die statische und dynamische Lichtstreuung wurden mit einer Anlage gemessen, die u. a. aus einem Stabilite[R] 2060-lls Kr-Laser von Spectra-Physics, einem Goniometer Sp-86 von ALV und einem ALV-3000 Digital Strukturator/Korrelator besteht. Der Krypton-Ionenlaser arbeitete mit einer Wellenlänge von 647,1 nm.
Probenpräparation: Die wäßrigen Silicon-Radikalmakroinitiator-Dispersionen und anderen Siliconnetzwerkdispersionen wurden mit $10^{-4}$ molaren Kaliumbromidlösungen, die wäßrigen Pfropfcopolymer-Dispersionen mit deionisiertem Wasser mit einer spezifischen Leitfähigkeit von 0,056 μS/cm verdünnt und die Proben dreimal durch Millex[R]-GS-Filter (0,22 μm Porengröße) von Millipore filtriert. Die Pfropfcopolymer-Dispersionen in Dimethylformamid wurden dreimal durch Millex[R]-FGS-Filter (0,2 μm Porengröße) von Millipore filtriert. Die Meßtemperatur bei den Lichtstreuexperimenten betrug 20°C. Die dynamischen Lichtstreumessungen wurden winkelabhängig von 50° bis 130° in 20°-Schritten durchgeführt, beim statischen Lichtstreuexperiment wurde die Winkelabhängigkeit des Streulichts von 30° bis 140° in 10°-Schritten gemessen.

- Differentialkalorimetrie(DSC)-Messungen:

Die Substanzen wurden an einer DSC 7 von Perkin Elmer vermessen. Als Eichsubstanz diente Indium. Bei den Radikalinitiator-enthaltenden Ausgangssilanen wurden jeweils 2 - 3 mg, bei den Silicon-Radikalmakroinitiatoren jeweils 10 - 12 mg eingewogen. Die Heizrate betrug 10 K/min.

1) Herstellung von Radikalinitiator-enthaltenden Ausgangssilanen (Beispiele 1 und 2):

**Beispiel 1**

4,4'-Azobis-[4-cyanopentansäure-(N-(Methyl)-N-((3-triethoxysilyl)-propyl))amid], I

7,5 g (23,6 mmol) 4,4'-Azobis(4-cyanopentansäurechlorid) wurden in 20 ml Dichlormethan gelöst und filtriert. Die Lösung wurde bei -10°C zu einer Mischung von 11,06 g (47,2 mmol) Methylaminopropyltriethoxysilan und 5,26 g (52 mmol) Triethylamin in 500 ml wasserfreiem Diethylether getropft und das Reaktionsgemisch 1 Stunde bei -10°C gerührt. Das entstandene weiße Präzipitat wurde abfiltriert und das klare Filtrat bei 25°C im Hochvakuum bis zur Gewichtskonstanz eingeengt. Man erhielt 15,0 g (89 % d. Th.) leicht gelbes, kristallines I.

Beispiel 2:

4,4'-Azobis-[4-cyanopentansäure-(N-(Methyl)-N-((3-trimethoxysilyl)-propyl))amid], II

Die Vefahrensweise von Beispiel 1 wurde wiederholt mit der Änderung, daß anstelle 11,06 g (47,2 mmol) Methylaminopropyltriethoxysilan 9,08 g (47,2 mmol) Methylaminopropyltrimethoxysilan eingesetzt wurden. Man erhielt 13,4 g (90 % d. Th.) II.

2) Herstellung von Drganopolysiloxan-Radikalmakroinitiatoren (Beispiele 3 bis 7) und Herstellung von vernetzten Siliconpfropfgrundlagen gemäß dem Stand der Technik (Vergleichsbeispiele 1 bis 3):

Beispiel 3:

500 g Wasser, 6 g Dodigen[R] 226 der Hoechst AG (Cocosalkyldimethylbenzylammoniumchlorid, 50%ig in Wasser) und 0,5 g Natriumhydroxidlösung (10%ig in Wasser) wurden vorgelegt und bei 20°C unter Rühren im Verlauf von 2 Stunden mit einer Mischung aus 99,0 g (0,73 mol) Methyltrimethoxysilan und 1,0 g (1,4 mmol) I aus Beispiel 1 versetzt. Nach weiteren 8 Stunden Rühren bei 20°C erhielt man eine stabile, klare, leicht opaleszierende Dispersion mit einem Festgehalt von 8,6 %. Mittels statischer und dynamischer Lichtstreuung wurde ein hydrodynamischer Radius $R_h$ der monodispersen, sphärischen Partikel von 9,5 nm und eine Molmasse $M_w$ von $1,1.10^6$ ermittelt. Mittels Differentialkalorimetrie (DSC) ließ sich der quantitative Einbau von I in das Siliconnetzwerk nachweisen.

Beispiel 4:

Die Verfahrensweise aus Beispiel 3 wurde wiederholt mit der Änderung, daß anstelle einer Mischung aus 99,0 g Methyltrimethoxysilan und 1,0 g I eine Mischung aus 97,0 g (0,71 mol) Methyltrimethoxysilan und 3,0 g (4,2 mmol) I aus Beispiel 1 zu der Vorlage dosiert wurde. Die erhaltene stabile, klare, leicht opaleszierende Dispersion hatte einen Festgehalt von 8,7 %. Mittels statischer und dynamischer Lichtstreuung wurde ein hydrodynamischer Radius $R_h$ der monodispersen, sphärischen Partikel von 11,0 nm und eine Molmasse $M_w$ von $1,5.10^6$ ermittelt. Mittels Differentialkalorimetrie (DSC) ließ sich der quantitative Einbau von I in das Siliconnetzwerk nachweisen.

Beispiel 5:

Die Verfahrensweise aus Beispiel 3 wurde wiederholt mit der Änderung, daß anstelle einer Mischung aus 99,0 g Methyltrimethoxysilan und 1,0 g I eine Mischung aus 95,0 g (0,70 mol) Methyltrimethoxysilan und 5,0 g (7,0 mmol) I aus Beispiel 1 zu der Vorlage dosiert wurde. Die erhaltene stabile, klare, leicht opaleszierende Dispersion hatte einen Festgehalt von 8,8 %. Mittels statischer und dynamischer Lichtstreuung wurde ein hydrodynamischer Radius $R_h$ der monodispersen, sphärischen Partikel von 13,3 nm und eine Molmasse Mw von $2,7.10^6$ ermittelt. Mittels Differentialkalorimetrie (DSC) ließ sich der quantitative Einbau von I in das Siliconnetzwerk nachweisen.

Vergleichsbeispiel 1:

Die Verfahrensweise aus Beispiel 3 wurde wiederholt mit der Änderung, daß anstelle einer Mischung aus 99,0 g Methyltrimethoxysilan und 1,0 g I eine Mischung aus 97,0 g (0,71 mol) Methyltrimethoxysilan und 3,0 g (12,1 mmol) Methacryloxypropyltrimethoxysilan zu der Vorlage dosiert wurde. Die resultierende stabile, klare, leicht opaleszierende Dispersion hatte einen Festgehalt von 8,5 %. Mittels statischer und dynamischer Lichtstreuung wurde ein hydrodynamischer Radius $R_h$ der monodispersen, sphärischen Partikel von 9,3 nm und eine Molmasse $M_w$ von $1,0.10^6$ ermittelt.

Mittels Differentialkalorimetrie (DSC) ließ sich der quantitative Einbau von I in das Siliconnetzwerk nachweisen.

Beispiel 6:

Zu einer Vorlage aus 2000 g Wasser, 12 g Dodigen[R] 226 (50%ig in Wasser) und 10 g Natriumhydroxidlösung (10 %ig in Wasser) wurde im Verlauf von 6 Stunden bei 20°C eine Mischung aus 100,0 g (0,67 mol) Dimethyldiethoxysilan, 97,4 g (0,72 mol) Methyltrimethoxysilan, 2,6 g (4,1 mmol) II aus Beispiel 2 und 20 g Methanol unter Rühren zugetropft. Nach weiteren 2 Stunden Rühren bei 20°C erhielt man eine stabile, opaleszierende Dispersion mit 5,3% Festgehalt.

Beispiel 7:

Zu einer Vorlage aus 2000 g Wasser, 12 g Dodigen[R] 226 (50 %ig in Wasser) und 10 g Natriumhydroxidlösung (10%ig in Wasser) wurde im Verlauf von 6 Stunden bei 20°C eine Mischung aus 160,0 g (1,08 mol) Dimethyldiethoxysilan, 36,7 g (0,27 mol) Methyltrimethoxysilan, 2,6 g (4,1 mmol) II aus Beispiel 2 und 20 g Methanol unter Rühren zugetropft. Nach weiteren 2 Stunden Rühren bei 20°C erhielt man eine stabile, feinteilige, weiße Dispersion mit 5,4% Festgehalt.

Vergleichsbeispiel 2:

Es wurde verfahren wie in Beispiel 7 mit der Änderung, daß anstelle einer Mischung aus 160,0 g Dimethyldiethoxysilan, 36,7 g Methyltrimethoxysilan, 2,6 g II aus Beispiel 2 und 20 g Methanol eine Mischung aus 160,0 g (1,08 mol) Dimethyldiethoxysilan, 37,9 g (0,28 mol) Methyltrimethoxysilan und 2,02 g (8,1 mmol) Methacryloxypropyltrimethoxysilan zugetropft wurde. Man erhielt eine stabile, feinteilige, weiße Dispersion mit 5,2 % Festgehalt.

Vergleichsbeispiel 3:

Es wurde verfahren wie in Beispiel 7 mit der Änderung, daß anstelle einer Mischung aus 160,0 g Dimethyldiethoxysilan, 36,7 g Methyltrimethoxysilan, 2,6 g II aus Beispiel 2 und 20 g Methanol eine Mischung aus 160,0 g (1,08 mol) Dimethyldiethoxysilan und 40,8 g (0,30 mol) Methyltrimethoxysilan zugetropft wurde. Man erhielt eine stabile, feinteilige, weiße Dispersion mit 5,1% Festgehalt.

3) Herstellung der Pfropfcopolymeren:

Beispiel 8:

50 g der Dispersion aus Beispiel 3 mit 8,6 % Festgehalt wurden mit 0,5 g Dodigen[R] 226 (50%ig in Wasser) und weiteren 50 g Wasser versetzt, 8 Stunden gerührt und anschließend 20 Minuten mit Stickstoff gesättigt. Nach Zugabe von 4,5 g Methylmethacrylat und 10 Minuten Rühren wurde auf 80°C aufgeheizt und innerhalb 1 Stunde bei 80°C auspolymerisiert. Nach Zusatz von 100 g Wasser wurden bei 40°C und 50 mbar Druck 100 g Destillat abgenommen. Man erhielt eine opaleszierende Dispersion mit einem Festgehalt von 8,0 % und einem Anteil an Polymethylmethacrylat im Pfropfcopolymeren von 50 %. Mittels statischer und dynamischer Lichtstreuung wurde ein hydrodynamischer Radius $R_h$ der monodispersen, sphärischen Partikel von 16 nm und eine Molmasse $M_w$ von $3{,}4.10^6$ ermittelt. Aus den Lichtstreudaten von Beispielen 3 und 8 konnte ermittelt werden, daß das Polymethylmethacrylat im Pfropfcopolymeren Hohlkugelstruktur hatte, das Pfropfcopolymere somit (Silicon-)Kern-(Polymethylmethacrylat-) Schale-Struktur aufwies. Durch Überführen der wäßrigen Dispersion in ein Dimethylformamid-Sol und Bestimmung sowohl des hydrodynamischen Radius als auch des Trägheitsradius des Pfropfcopolymeren in Dimethylformamid mittels statischer und dynamischer Lichtstreuung konnte gezeigt werden, daß das gemäß Beispiel 8 erhaltene Pfropfcopolymere in nichtwäßrigem Medium eine Sternpolymerstruktur mit einem vernetzten Siliconkern und davon linear ausgehenden Polymethylmethacrylat-Pfropfästen aufwies.

Beispiel 9:

Es wurde verfahren wie in Beispiel 8 mit der Änderung, daß anstelle der Dispersion aus Beispiel 3 die Dispersion aus Beispiel 4 eingesetzt wurde. Man erhielt eine opaleszierende Dispersion mit einem Festgehalt von 8,0 % und einem Anteil an Polymethylmethacrylat im Pfropfcopolymeren von 50 %. Mittels statischer und dynamischer Lichtstreuung wurde ein hydrodynamischer Radius $R_h$ der monodispersen, sphärischen Partikel von 16 nm und eine Molmasse $M_w$ von $4{,}0.10^6$ ermittelt. Aus den Lichtstreudaten von Beispielen 4 und 9 konnte ermittelt werden, daß das Polymethylmethacrylat im Pfropfcopolymeren Hohlkugelstruktur hatte, das Pfropfcopolymere somit (Silicon-)Kern-(Polymethylmethacrylat-)Schale-Struktur aufwies. Durch Überführen der wäßrigen Dispersion in ein Dimethylformamid-Sol und Bestimmung sowohl des hydrodynamischen Radius als auch des Trägheitsradius des Pfropfcopolymeren in Dimethylformamid mittels statischer und dynamischer Lichtstreuung konnte gezeigt werden, daß das gemäß Beispiel 9 erhaltene Pfropfcopolymere in nichtwäßrigem Medium eine Sternpolymerstruktur mit einem vernetzten Siliconkern und davon linear ausgehenden Polymethylmethacrylat-Pfropfästen aufwies.

Beispiel 10:

Es wird verfahren wie in Beispiel 8 mit der Änderung, daß anstelle der Dispersion aus Beispiel 3 die Dispersion aus Beispiel 5 eingesetzt wird. Man erhält eine opaleszierende Dispersion mit einem Festgehalt von 8,1 % und einem Anteil an Polymethylmethacrylat im Pfropfcopolymeren von 50 %. Mittels statischer und dynamischer Lichtstreuung wurde ein hydrodynamischer Radius $R_h$ der monodispersen, sphärischen Partikel von 18 nm und eine Molmasse $M_w$ von $5,1.10^6$ ermittelt. Aus den Lichtstreudaten von Beispielen 5 und 10 konnte ermittelt werden, daß das Polymethylmethacrylat im Pfropfcopolymeren Hohlkugelstruktur hatte, das Pfropfcopolymere somit (Silicon-)Kern-(Polymethylmethacrylat-)Schale-Struktur aufwies. Durch Überführen der wäßrigen Dispersion in ein Dimethylformamid-Sol und Bestimmung sowohl des hydrodynamischen Radius als auch des Trägheitsradius des Pfropfcopolymeren in Dimethylformamid mittels statischer und dynamischer Lichtstreuung konnte gezeigt werden, daß das gemäß Beispiel 10 erhaltene Pfropfcopolymere in nichtwäßrigem Medium eine Sternpolymerstruktur mit einem vernetzten Siliconkern und davon linear ausgehenden Polymethylmethacrylat-Pfropfästen aufwies.

Beispiel 11:

Es wurde verfahren wie in Beispiel 8 mit der Änderung, daß anstelle der Dispersion aus Beispiel 3 die Dispersion aus Beispiel 4 eingesetzt wurde und anstelle 4,5 g Methylmethacrylat 4,5 g Styrol zugegeben wurde. Man erhielt eine opaleszierende Dispersion mit einem Festgehalt von 8,2% und einem Anteil an Polystyrol im Pfropfcopolymeren von 50 %. Mittels statischer und dynamischer Lichtstreuung wurde ein hydrodynamischer Radius $R_h$ der monodispersen, sphärischen Partikel von 16 nm und eine Molmasse $M_w$ von $3.2.10^6$ ermittelt. Aus den Lichtstreudaten von Beispielen 4 und 11 konnte ermittelt werden, daß das Polystyrol im Pfropfcopolymeren Hohlkugelstruktur hatte, das Pfropfcopolymere somit (Silicon-)Kern-(Polystyrol-)Schale-Struktur aufwies. Durch Überführen der wäßrigen Dispersion in ein Dimethylformamid-Sol und Bestimmung sowohl des hydrodynamischen Radius als auch des Trägheitsradius des Pfropfcopolymeren in Dimethylformamid mittels statischer und dynamischer Lichtstreuung konnte gezeigt werden, daß das gemäß Beispiel 11 erhaltene Pfropfcopolymere in nichtwäßrigem Medium eine Sternpolymerstruktur mit einem vernetzten Siliconkern und davon linear ausgehenden Polystyrol-Pfropfästen aufwies.

Vergleichsbeispiel 4:

50 g der Dispersion aus Vergleichsbeispiel 1 mit 8,5 % Festgehalt wurden mit 0,5 g Dodigen[R] 226 (50%ig in Wasser) und weiteren 50 g Wasser versetzt, 8 Stunden gerührt und anschließend 20 Minuten mit Stickstoff gesättigt. Nach Zugabe von 0,5 g Methylmethacrylat sowie 25 mg Cumolhydroperoxid (80%ig in Cumol) und 10 Minuten Rühren wurden 70 mg Natriumhydrogensulfit (37%ig in Wasser) sowie weitere 4,0 g Methylmethacrylat zugegeben und eine weitere Stunde gerührt. Anschließend wurde auf 80°C aufgeheizt und 2 Stunden bei 80°C auspolymerisiert. Nach Zusatz von 100 g Wasser wurden bei 40°C und 50 mbar Druck 100 g Destillat abgenommen. Man erhielt eine transluzente, weißliche Dispersion mit einem Festgehalt von 8,1 % und einem Anteil an Polymethylmethacrylat im Pfropfcopolymeren von 50 %. Mittels statischer und dynamischer Lichtstreuung wurde ein hydrodynamischer Radius $R_h$ der monodispersen, sphärischen Partikel von 20 nm und eine Molmasse $M_w$ von $5,1.10^6$ ermittelt. Aus den Lichtstreudaten von Vergleichsbeispielen 1 und 4 konnte ermittelt werden, daß das Polymethylmethacrylat im Pfropfcopolymeren Hohlkugelstruktur hatte, das Pfropfcopolymere somit (Silicon-)Kern-(Organopolymer-)Schale-Struktur aufwies. Durch Überführen der wäßrigen Dispersion in ein Dimethylformamid-Sol und Bestimmung sowohl des hydrodynamischen Radius als auch des Trägheitsradius des Pfropfcopolymeren in Dimethylformamid mittels statischer und dynamischer Lichtstreuung konnte gezeigt werden, daß das gemäß Vergleichsbeispiel 4 erhaltene Pfropfcopolymere in nichtwäßrigem Medium eine "weiche Kugel"-Struktur, d. h. schlaufenartige Anordnung der Polymethylmethacrylat-Ketten um den Siliconkern durch Mehrfachanbindung und lose Verschlaufungen der Pfropfäste aufwies.

Beispiel 12:

540 g Dispersion aus Beispiel 6 wurde vorgelegt und bei 30°C im Wasserstrahlvakuum 85 g Wasser/Alkoholgemisch abdestilliert. 455 g der resultierenden Dispersion mit einem Festgehalt von 5,4 % wurden mit 45 g Wasser auf einen Festgehalt von 5,0 % eingestellt, mit 1,5 g Dodigen[R] 226 (50%ig in Wasser) versetzt, 1 Stunde gerührt und anschließend

**EP 0 659 838 B1**

30 Minuten mit Stickstoff gesättigt. Nach Zugabe von 25 g Methylmethacrylat und 30 Minuten Rühren wurde auf 80°C aufgeheizt und 2 Stunden bei 80°C auspolymerisiert. Nach Zusatz von 200 g Wasser wurden bei 90°C und 400 mbar Druck 300 g Destillat abgenommen. Man erhielt eine feinteilige, weiße, stabile Dispersion mit einem Festgehalt von 11,3 % und einem Anteil an Polymethylmethacrylat im Pfropfcopolymeren von 50 %.

Beispiel 13:

580 g Dispersion aus Beispiel 7 wurden vorgelegt und bei 30°C im Wasserstrahlvakuum 90 g Wasser/Alkoholgemisch abdestilliert. 490 g der resultierenden Dispersion mit einem Festgehalt von 5,1 % wurden mit 10 g Wasser auf einen Festgehalt von 5,0 % eingestellt. Anschließend wurde wie in Beispiel 12 verfahren mit der Änderung, daß anstelle von 25 g Methylmethacrylat 12,5 g Styrol zugegeben wurden. Man erhielt eine feinteilige, weiße, stabile Dispersion mit einem Festgehalt von 8,8 % und einem Anteil an Polystyrol im Pfropfcopolymeren von 33 %. 9,60 g sprühgetrocknetes (Laborsprühtrockner 190 der Fa. Büchi), pulverförmiges Pfropfcopolymerisat aus Beispiel 13 wurde 16 Stunden in einer Soxhlet-Apparatur mit Toluol extrahiert. Der extrahierbare Polystyrolanteil betrug weniger als 16 Gew.-% (0,50 g) des im eingesetzten Pfropfcopolymeren enthaltenen Organopolymeranteils (i. e. 3,20 g).

Vergleichsbeispiel 5:

1110 g Dispersion aus Vergleichsbeispiel 2 wurden vorgelegt und bei 30°C im Wasserstrahlvakuum 235 g Wasser/Alkoholgemisch abdestilliert. 875 g der resultierenden Dispersion mit einem Festgehalt von 5,7 % wurden mit 125 g Wasser auf einen Festgehalt von 5,0 % eingestellt und mit 3,0 g Dodigen$^R$ 226 (50%ig in Wasser) versetzt. Anschließend wurde wie in Beispiel 12 verfahren mit der Änderung, daß anstelle von 25 g Methylmethacrylat 25 g Styrol, 1 g Kaliumperoxodisulfat-Lösung (5%ig in Wasser) und 1 g Natriumhydrogensulfit-Lösung (10%ig in Wasser) zugegeben wurden und anstelle von 80°C eine Polymerisationstemperatur von 65°C gewählt wurde. Man erhielt eine feinteilige, weiße, stabile Dispersion mit einem Festgehalt von 8,0 % und einem Anteil an Polystyrol im Pfropfcopolymeren von 33 %. 18,60 g sprühgetrocknetes (Laborsprühtrockner 190 der Fa. Büchi), pulverförmiges Pfropfcopolymerisat aus Vergleichsbeispiel 5 wurde 16 Stunden in einer Soxhlet-Apparatur mit Toluol extrahiert. Der extrahierbare Polystyrolanteil betrug 30 Gew.-% (1,85 g) des im eingesetzten Pfropfcopolymeren enthaltenen Organopolymeranteils (i. e. 6,20 g).

Vergleichsbeispiel 6:

1100 g Dispersion aus Vergleichsbeispiel 3 wurden vorgelegt und bei 30°C im Wasserstrahlvakuum 210 g Wasser/Alkoholgemisch abdestilliert. 890 g der resultierenden Dispersion mit einem Festgehalt von 5,6 % wurden mit 110 g Wasser auf einen Festgehalt von 5,0 % eingestellt und mit 3,0 g Dodigen$^R$ 226 (50%ig in Wasser) versetzt. Anschließend wurde wie in Beispiel 12 verfahren mit der Änderung, daß anstelle von 25 g Methylmethacrylat 25 g Styrol, 1 g Kaliumperoxodisulfat-Lösung (5%ig in Wasser) und 1 g Natriumhydrogensulfit-Lösung (10%ig in Wasser) zugegeben wurden und anstelle von 80°C eine Polymerisationstemperatur von 65°C gewählt wurde. Man erhielt eine feinteilige, weiße, stabile Dispersion mit einem Festgehalt von 8,1 % und einem Anteil an Polystyrol im Pfropfcopolymeren von 33 %. 18,90 g sprühgetrocknetes (Laborsprühtrockner 190 der Fa. Büchi), pulverförmiges Pfropfcopolymerisat aus Vergleichsbeispiel 6 wurde 16 Stunden in einer Soxhlet-Apparatur mit Toluol extrahiert. Der extrahierbare Polystyrolanteil betrug mehr als 80 Gew.-% (5,1 g) des im eingesetzten Pfropfcopolymeren enthaltenen Organopolymeranteils (i. e. 6,30 g).

**Patentansprüche**

1. Vernetzte, radikalbildene Gruppen aufweisende Organopolysiloxane, aufgebaut aus
   0,2 bis 50,0 Gew.-% Einheiten der allgemeinen Formel

$$[R_aSi(O_{(3-a)/2})-R^1-X-(R^1-Si(O_{(3-a)/2}))_bR_a] \tag{1},$$

0 bis 80,0 Gew.-% Einheiten der allgemeinen Formel

$$[R_3SiO_{1/2}] \tag{2},$$

0 bis 99,5 Gew.-% Einheiten der allgemeinen Formel

$$[R_2SiO_{2/2}] \tag{3},$$

0 bis 99,8 Gew.-% Einheiten der allgemeinen Formel

# EP 0 659 838 B1

$$[RSiO_{3/2}] \tag{4},$$

und

0 bis 80,0 Gew.-% Einheiten der allgemeinen Formel

$$[SiO_{4/2}] \tag{5},$$

wobei

**R** gleiche oder verschiedene einwertige SiC-gebundene, gegebenenfalls substituierte $C_1$- bis $C_{18}$-Kohlenwasserstoffreste,

**R$^1$** gleiche oder verschiedene zweiwertige SiC-gebundene, gegebenenfalls substituierte $C_1$- bis $C_{18}$-Kohlenwasserstoffreste, welche durch zweibindige, beidseitig an Kohlenstoffatome gebundene Reste aus der Gruppe -O-, -COO-, -OOC-, -CONR$^2$-, -NR$^2$CO-und -CO- unterbrochen sein können,

**R$^2$** ein Wasserstoffatom oder einen Rest **R**,

**X** einen Rest aus der Gruppe -N=N-, -O-O-, -S-S- und -C(C$_6$H$_5$)$_2$-C(C$_6$H$_5$)$_2$-,

**a** die Werte 0, 1 oder 2 und,

**b** die Werte 0 oder 1 bedeuten

mit der Maßgabe, daß die Summe der Einheiten der allgemeinen Formeln (4) und (5) mindestens 0,5 Gew.-% beträgt und daß höchstens 5 Gew.-% der Organopolysiloxane mit Toluol extrahierbar sind.

2. Organopolysiloxane nach Anspruch 1, welche 0,2 bis 50,0 Gew.-% Einheiten der allgemeinen Formel (8)

$$[(CH_3)_aSi(O_{(3-a)/2})\text{-}(CH_2)_3\text{-}N(R^3)\text{-}C(O)\text{-}(CH_2)_2\text{-}C(CN)(CH_3)\text{-}N{=}]_2$$

besitzen, in der

**R$^3$** ein Wasserstoffatom, einen Methyl- oder Cyclohexylrest bedeutet und

**a** die vorstehenden Bedeutungen aufweist.

3. Verfahren zur Herstellung der vernetzten, radikalbildene Gruppen aufweisenden Organopolysiloxane nach Anpruch 1 oder 2, bei dem Silane der allgemeinen Formel (9)

$$R_aSi((OR^4)_{3-a})\text{-}R^1\text{-}X\text{-}(R^1\text{-}Si(OR^4)_{3-a}))_bR_a \tag{9},$$

und siliciumorganische Verbindungen der allgemeinen Formel (10)

$$R_cSi(OR^4)_{4-c} \tag{10},$$

und gegebenenfalls siliciumorganische Verbindungen aus Einheiten der allgemeinen Formel (11)

$$R_d(R^4O)_eSiO_{4-d-e/2} \tag{11},$$

wobei

**R$^4$** die Bedeutungen von **R**,

**c** die Werte 0, 1, 2 oder 3,

**d** und **e** jeweils unabhängig voneinander die Werte 0, 1, 2, 3 oder 4 und

**R**, **R$^4$**, **X**, **a** und **b** die vorstehenden Bedeutungen aufweisen, zu einer bewegten Mischung aus Emulgator und Wasser dosiert werden.

4. Verfahren zur Herstellung von Pfropfcopolymerisaten, bei dem

95 bis 5 Gew.-% an Organopolysiloxanen nach Anpruch 1 oder 2 oder an Organopolysiloxanen, hergestellt nach Anspruch 3, mit

5 bis 95 Gew.-% an ethylenisch ungesättigten Monomeren in wäßriger Dispersion umgesetzt werden.

5. Verfahren nach Anspruch 4, bei dem eine Dispersion der Organopolysiloxane vorgelegt wird und die Monomeren zudosiert werden.

12

**6.** Verfahren nach Anspruch 4 oder 5, bei dem styrol sowie Acrylsäureester und Methacrylsäureester von aliphatischen Alkoholen mit 1 - 4 C-Atomen als Monomere eingesetzt werden.

**7.** Pfropfcopolymerisate erhältlich nach dem Verfahren nach einem der Ansprüche 4 bis 6.

**Claims**

**1.** Crosslinked organopolysiloxanes which contain groups which form free radicals and are built up from 0.2 to 50.0% by weight of units of the general formula

$$[R_a Si(O_{(3-a)/2})R^1-X-(R^1-Si(O_{(3-a)/2}))_b R_a], \qquad (1),$$

0 to 80.0% by weight of units of the general formula

$$[R_3 SiO_{1/2}] \qquad (2),$$

0 to 99.5% by weight of units of the general formula

$$[R_2 SiO_{2/2}] \qquad (3),$$

0 to 99.8% by weight of units of the general formula

$$[RSiO_{3/2}] \qquad (4),$$

and 0 to 80.0% by weight of units of the general formula

$$[SiO_{4/2}] \qquad (5),$$

in which

$R$   are identical or different monovalent SiC-bonded, optionally substituted $C_1$- to $C_{18}$-hydrocarbon radicals,

$R^1$   are identical or different divalent SiC-bonded, optionally substituted $C_1$- to $C_{18}$-hydrocarbon radicals which can be interrupted by divalent radicals, bonded to carbon atoms on both sides, from the group consisting of -O-, -COO-, -OOC-, -CONR$^2$-, -NR$^2$CO- and -CO-,

$R^2$   is a hydrogen atom or a radical R,

$X$   is a radical from the group consisting of -N=N-, -O-O-, -S-S- and -C(C$_6$H$_5$)$_2$-C(C$_6$H$_5$)$_2$-,

$a$   has the values 0, 1 or 2 and

$b$   has the values 0 or 1,

with the proviso that the sum of units of the general formulae (4) and (5) is at least 0.5% by weight and that not more than 5% by weight of the organopolysiloxanes can be extracted with toluene.

**2.** Organopolysiloxanes according to Claim 1, which have 0.2 to 50.0% by weight of units of the general formula (8)

$$[(CH_3)_a Si(O_{(3-a)/2})-(CH_2)_3-N(R^3)-C(O)-(CH_2)_2 C(CN)(CH_3)-N=]_2$$

in which

$R^3$   is a hydrogen atom or a methyl or cyclohexyl radical and has the above meanings.

**3.** Process for the preparation of the crosslinked organopolysiloxanes which contain groups which form free radicals according to Claim 1 or 2, in which silanes of the general formula (9)

$$R_a Si((OR^4)_{3-a})-R^1-X-(R^1-Si(OR^4)_{3-a}))_b R_a \qquad (9),$$

and organosilicon compounds of the general formula (10)

$$R_c Si(OR^4)_{4-c} \qquad (10),$$

and if appropriate organosilicon compounds of units of the general formula (11)

$$R_d(R^4 O)_e SiO_{4-d-e/2} \qquad (11),$$

in which

$R^4$ has the meanings of R,

c has the values 0, 1, 2 or 3,

d and e in each case independently of one another have the values 0, 1, 2, 3 or 4 and

R, $R^4$, X, a and b have the above meanings, are metered into an agitated mixture of emulsifier and water.

**4.** Process for the preparation of graft copolymers, in which

95 to 5% by weight of organopolysiloxanes according to Claim 1 or 2 or of organopolysiloxanes prepared according to Claim 3 are reacted with
5 to 95% by weight of an ethylenically unsaturated monomers in an aqueous dispersion.

**5.** Process according to Claim 4, in which a dispersion of the organopolysiloxanes is initially introduced into the reaction vessel and the monomers are metered in.

**6.** Process according to Claim 4 or 5, in which styrene and acrylic acid esters and methacrylic acid esters of aliphatic alcohols having 1 - 4 C atoms are employed as monomers.

**7.** Graft copolymers obtainable by the process accordina to one of Claims 4 to 6.

## Revendications

**1.** Organopolysiloxane réticulé, contenant des groupements formant des radicaux, constitué de
0,2 à 50,0% en poids d'unités de formule générale

$$[R_a Si(O_{(3-a)/2})\text{-}R^1\text{-}X\text{-}(R^1\text{-}Si(O_{(3-a)/2}))_b R_a] \tag{1},$$

0 à 80,0% en poids d'unités de formule générale

$$[R_3 SiO_{1/2}] \tag{2},$$

0 à 99,5% en poids d'unités de formule générale

$$[R_2 SiO_{2/2}] \tag{3},$$

0 à 99,8% en poids d'unités de formule générale

$$[RSiO_{3/2}] \tag{4},$$

et
0 à 80,0% en poids d'unités de formule générale

$$[SiO_{4/2}] \tag{5},$$

où

R représente des radicaux hydrocarbures monovalents, identiques ou différents, à liaison SiC, facultativement substitués, en $C_1$ à $C_{18}$,

$R^1$ représente des radicaux hydrocarbures bivalents, identiques ou différents, à liaison SiC, facultativement substitués, en $C_1$ à $C_{18}$, qui peuvent être interrompus par des radicaux à deux liaisons, liés à chaque extrémité à un atome de carbone, choisis parmi le groupe -O-, -COO-, -OOC-, $-CONR^2$-, $-NR^2CO$- et -CO-,

$R^2$ représente un atome d'hydrogène ou un radical R,

X représente un radical choisi parmi le groupe -N=N-, -O-O-, -S-S- et $-C(C_6H_5)_2$-$C(C_6H_5)_2$-,

a représente la valeur 0, 1 ou 2 et,

b représente la valeur 0 ou 1,

avec la condition que la somme des unités de formules générales (4) et (5) atteigne au moins 0,5% en poids et que au plus 5% en poids de l'organopolysiloxane soient extractibles par le toluène.

**2.** Organopolysiloxane suivant la revendication 1, qui possède 0,2 à 50,0% en poids d'unités de formule générale (8)

$$[(CH_3)_a Si(O_{(3-a)/2})\text{-}(CH_2)_3\text{-}N(R^3)\text{-}C(O)\text{-}(CH_2)_2\text{-}C(CN)(CH_3)\text{-}N=]_2$$

dans laquelle

$R^3$ représente un atome d'hydrogène, un radical méthyle ou cyclohexyle, et
a présente les significations précédentes.

3. Procédé de préparation d'organopolysiloxane réticulé, contenant des groupements formant des radicaux suivant la revendication 1 ou 2, dans lequel le silane de formule générale (9)

$$R_aSi((OR^4)_{3-a})\text{-}R^1\text{-}X\text{-}(R^1\text{-}Si((OR^4)_{3-a}))_bR_a \qquad (9),$$

et le composé organosilicié de formule générale (10)

$$R_cSi(OR^4)_{4-c} \qquad (10),$$

et facultativement, un composé organosilicié d'unités de formule générale (11)

$$R_d(R^4O)_eSiO_{4-d-e/2} \qquad (11),$$

où

$R^4$ a la signification de R,
c a la valeur 0, 1, 2 ou 3,
d et e ont, chacun indépendamment l'un de l'autre, la valeur 0, 1, 2, 3 ou 4 et
R, $R^4$, X, a et b ont les significations précédentes, sont ajoutés à un mélange agité d'émulsionnant et d'eau.

4. Procédé de préparation de copolymères greffés, dans lequel

95 à 5% en poids d'un organopolysiloxane suivant la revendication 1 ou 2 ou d'un organopolysiloxane prépare suivant la revendication 3,

sont mis à réagir en dispersion aqueuse avec 5 à 95% en poids d'un monomère éthyléniquement insaturé.

5. Procédé suivant la revendication 4, dans lequel on prépare une dispersion de l'organopolysiloxane et on ajoute le monomère.

6. Procédé suivant la revendication 4 ou 5, dans lequel du styrène ainsi que des esters de l'acide acrylique et des esters de l'acide méthacrylique d'alcools aliphatiques avec 1 à 4 atomes de carbone sont introduits comme monomères.

7. Copolymère greffé pouvant être obtenu par le procédé suivant l'une quelconque des revendications 4 à 6.